Europäisches Patentamt

European Patent Office

Office européen des brevets

(19)

(11) **EP 1 345 208 A2**

(12) **EUROPÄISCHE PATENTANMELDUNG**

(43) Veröffentlichungstag:
17.09.2003 Patentblatt 2003/38

(51) Int Cl.⁷: **G10L 15/14**, G10L 17/00

(21) Anmeldenummer: 03004363.2

(22) Anmeldetag: 03.03.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK RO**

(30) Priorität: **02.03.2002 DE 10209324**

(71) Anmelder: **Daimler Chrysler AG**
**70567 Stuttgart (DE)**

(72) Erfinder:
• **Class, Fritz, Dr.**
**72587 Römerstein (DE)**
• **Haiber, Udo, Dr.**
**89075 Ulm (DE)**
• **Kaltenmeier, Alfred, Dr.**
**89075 Ulm (DE)**

(54) **Automatische Detektion von Sprecherwechseln in sprecheradaptiven Spracherkennungssystemen**

(57)   Ein Verfahren, welches es ermöglicht automatisch zur Laufzeit des Systems zu erkennen, ob der Sprecher wechselte, bzw. welcher (sprecherabhängige) Datensatz für den aktuellen Sprecher der richtige ist. Dies wird mittels eines Spracherkennungssystem erreicht, welches auf sogenannten Semi-Continuous Hidden Markov Modellen (SCHMM) basiert. In Zusammenhang mit der Klassifikation auf Basis der Semi-Continuous Hidden Markov Modelle werden Codebücher erstellt, welche aus n-dimensionalen Normalverteilungen bestehen. Dabei wird jede Normalverteilung durch ihren Mittelwertvektor µ und ihre Kovarianzmatrix K repräsentiert. Im Rahmen einer Sprecheradaption werden in der Regel die Parameter dieser Normalverteilungen, also Mittelwerte und/ oder Kovarianzmatrizen, sprecherspezifisch verändert. Dieser sprecherspezifische Datensatz wird dann zusätzlich zum sogenannten Baseline-Datensatz, welcher einem sprecher-unabhängigen Codebuch entspricht, abgespeichert. In erfinderischer Weise korreliert das Spracherkennungssystem das Sprachsignal mittels Vektorquantisierung mit dem sprecherunabhängigen und den sprecher-abhängigen Codebüchern. Auf Grundlage dieser Korrelation ist es dem Erkennungssystem sodann möglich das Sprachsignal einem dieser Codebücher zuzuordnen und somit die Identität eines Sprechers festzustellen.

EP 1 345 208 A2

## Beschreibung

Die Erfindung betrifft ein Verfahren nach dem Oberbegriff des Patentanspruchs 1.

Die automatische Spracherkennung wird heutzutage in einfachen Versionen schon in Produkten eingesetzt, z.B. zur Steuerung und Bedienung von Geräten und Maschinen oder telefonbasierten Auskunftssystemen. Diese Spracherkenner sind in der Regel im Prinzip für sprecherunabhängige Erkennung ausgelegt, d.h. jeder beliebige Benutzer kann ohne explizite Trainingsphase das System benutzen und die zulässigen Wörter bzw. Kommandos entsprechen. Diese Sprecherunabhängigkeit wird erreicht, indem man beim Grundtraining des Systems im Labor sehr viele Sprachstichproben von vielen Sprechern und großem Vokabular zugrunde legt.

Darüber hinaus werden Methoden eingesetzt das Spracherkennungssystem auch online während einer aktuellen Anwendung an die speziellen Bedingungen hinsichtlich Sprecher und Equipment (Mikrofon, Verstärkern, Raum) zu adaptieren. Diese Adaptionsmethoden können sowohl überwacht als auch unüberwacht eingesetzt werden.

Unüberwachte Adaption bedeutet, dass sich das Erkennungssystem unbemerkt vom Benutzer ständig an die aktuelle Situation adaptiert. Dafür werden in der Regel Schleppfenster eingesetzt, die gleitend über der Zeit bestimmte Parameter des Systems nachführen. Die Zeitkonstante des Schleppfensters (häufig auch Vergessensrate genannt) bestimmt die Adaptionsgeschwindigkeit.

Bei der Überwachten Adaption muss ein Benutzer explizit in einer Trainingsphase gezielt Wörter bzw. Sätze nachsprechen, die ihm vom System (akustisch oder optisch) vorgegeben werden. Aus diesen Eingaben (Sprachproben) werden sprecherspezifische Parameter im System generiert bzw. nachoptimiert. Die Methode der überwachten Adaption wird häufig bei solchen Sprechern angewandt, für die das sprecherunabhängige Basissystem sehr schlechte Erkennungsraten hat und für die auch mit den Methoden der unüberwachten Adaption keine deutliche Verbesserung der Erkennungsleistung erreichbar ist. Diese überwachte Adaption soll natürlich nur einmal erfolgen und der entsprechende sprecherspezifische Datensatz jedesmal verwendet werden, wenn dieser spezielle Benutzer das System bedient.

Bei beiden Methoden, der überwachten als auch der unüberwachten Adaptation, werden sprecherspezifische Parametersätze zusätzlich zu den Basisparametern abgespeichert. In vielen realen Applikation, wie z.B. "Sprachbedienung im Kraftfahrzeug", stellt sich das Problem, dass die Benutzer relativ häufig wechseln. Wenn nun für jeden (oder auch nur einige) Benutzer sprecherspezifische Datensätze angelegt wurden, stellt sich die Frage, welches der richtige Datensatz für den aktuellen Benutzer ist. Dies könnte natürlich durch Abfragen beim System-Neustart erfolgen. Abgesehen davon, dass dies eine sehr umständliche und nicht sehr benutzerfreundliche Methode ist, kommt es auch häufig vor, dass der Sprecher wechselt, während das System aktiviert ist und so keine neue Vorinitialisierung möglich ist.

Aufgabe der Erfindung ist es, ein Verfahren zu finden, welches es ermöglicht, automatisch zur Laufzeit des Systems zu erkennen, ob der Sprecher wechselte, bzw. welcher (sprecherabhängige) Datensatz für den aktuellen Sprecher der richtige ist.

Die Aufgabe wird durch ein Spracherkennungssystem gelöst, welches auf sogenannten Semi-Continuous Hidden Markov Modellen (SCHMM) basiert (Huang, Xuedong D., Y. Ariki und M. A. Jack *Hidden Markov models for speech recognition,* Edinburgh information technology series, Edinburgh University Press, Schottland, 1990). In Zusammenhang mit der Klassifikation auf Basis der Semi-Continuous Hidden Markov Modelle werden Codebücher erstellt, welche aus n-dimensionalen Normalverteilungen bestehen. Dabei wird jede Normalverteilung durch ihren Mittelwertvektor µ und ihre Kovarianzmatrix K repräsentiert. Im Rahmen einer Sprecheradaption werden in der Regel die Parameter dieser Normalverteilungen, also Mittelwerte und/oder Kovarianzmatrizen, sprecherspezifisch verändert. Dieser sprecherspezifische Datensatz wird dann zusätzlich zum sogenannten Baseline-Datensatz, welcher einem sprecher-unabhängigen Codebuch entspricht, abgespeichert. In erfinderischer Weise korreliert das Spracherkennungssystem das Sprachsignal mittels Vektorquantisierung mit dem sprecher-unabhängigen und den sprecher-abhängigen Codebüchern. Auf Grundlage dieser Korrelation ist es dem Erkennungssystem sodann möglich das Sprachsignal einem dieser Codebücher zuzuordnen und somit die Identität eines Sprechers festzustellen.

Auf diese vorteilhafte Verfahrensweise erlaubt es die Erfindung, einen Sprecherwechsel ausschließlich am Sprachsignal selbst zu detektieren, ohne auf die Verwendung von aus dem Stand der Technik bekannten Methoden zur Sprechererkennung zurückgreifen zu müssen. Eine derart naheliegende Lösung der Aufgabe hätte den Nachteil, dass infolge der Sprechererkennung bzw. Sprecherverifikation ein separates Erkennungssystem erforderlich wäre, welches parallel zum Spracherkennungssystem aktiv sein müßte. Ein solches zweites System ist jedoch aus Aufwands- bzw. Kostengründen in manchen Systemen nicht praktikabel.

Der vorliegende Erfindungsgegenstand beschreibt also eine Methode, mit welcher direkt mittels vom Sprachsignal abgeleiteten Parametern erkannt werden kann, ob ein Sprecherwechsel vorliegt. Im selben Schritt wird es in vorteilhafter Weise auch möglich festzustellen, welcher gespeicherte Satz von Parametern (Codebuch) des Klassifikators für die Spracherkennung bei dem aktuellen Sprecher optimal ist.

Bei den oben erwähnten Methoden zur Sprecheradaption werden gewinnbringend in den sprecher-spezifischen Codebüchern die Parameter der Normalverteilungen, also Mittelwerte und/oder Kovarianzmatrizen, sprecherspezifisch gegenüber dem sprecher-unabhängigen Codebuch verändert. Dieser sprecherspezifische Datensatz (sprecher-abhängiges Codebuch) wird dann zusätzlich zum sog. Baseline-Datensatz (sprecher-unabhängiges Codebuch) abgespeichert.

In der Anwendungsphase dieses Erkennungssystems findet eine sog. Vektorquantisierung statt. Dies ist eine Klassifikation von Merkmalsvektoren, die aus dem Sprachsignal berechnet werden, an den Normalverteilungen. Diese Klassifikation liefert "Wahrscheinlichkeitswerte" $p(x,k)$ eines Merkmalsvektors für jede Normalverteilung des Codebuchs.

Anhand des nachfolgenden Beispielszenarios wird das Prinzip des erfinderischen Verfahrens im Detail erläutert.

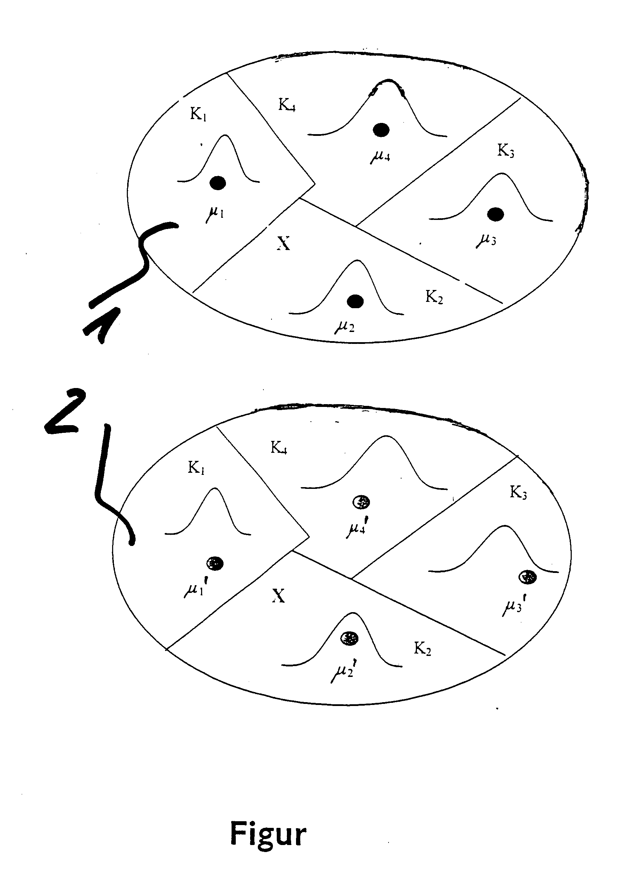

Dabei zeigt die Figur zwei beispielhafte Codebücher, wie sie zur Erkennung von Sprecherwechseln herangezogen werden könnten.

Das sprecher-unabhängige Codebuch 1 in der Figur besteht aus jeweils 4 Normalverteilungen ("Standard-Codebuch") mit den Parametern $\mu_1 ... , \mu_4$ (Mittelwertvektoren) und den zugehörigen Kovarianzmatrizen $K_1 ... K_4$. In einer Adaptionsphase trainiert nun ein Sprecher das System nach. Dabei werden die Mittelwertvektoren und Kovarianzmatrizen des Standard-Codebuchs modifiziert und es entsteht ein sprecher-abhängiges Codebuch 2 mit den neuen sprecher-spezifischen Mittelwerten $\mu_1' ... , \mu_4'$. Dieses nachtrainierte Codebuch 2 (bzw. nur die neuen Mittelwertvektoren) werden zusätzlich gespeichert.

In der Anwendungsphase des Erkennungssystems liegen beispielsweise nun 2 Codebücher vor: das Standard-Codebuch 1 für sprecher-unabhängige Erkennung, sowie das für einen speziellen Sprecher nach trainierte Codebuch 2; prinzipiell können natürlich beliebig viele nachtrainierte Codebücher vorliegen, ohne dass dies etwas an dem erfinderischen Verfahren änderte. Für jeden ankommenden Merkmalsvektor X aus dem Sprachsignal wird nun eine Klassifikation (sog. "Vektorquantisierung") an allen Normalverteilungen beider Codebücher durchgeführt. In unserem Beispiel erhalten wir für das Standard-Codebuch 1 die Werte $p(X,1)=0.2$ (Wahrscheinlichkeit der ersten Normalverteilung), $p(X,2)=0.6$, $p(X,3)=0.1$, $p(X,4)=0.1$. Entsprechende Werte ergeben sich für das nach trainierte Codebuch 2, beispielhaft $p(X,1)=0.3$, $p(X,2)=0.4$, $p(X,3)=0.1$ sowie $p(X,4)=0.2$.

Üblicherweise wird ein Schwellwert eingesetzt, um sehr kleine Wahrscheinlichkeitswerte auszuschließen. Im vorliegenden Beispiel sei dieser Schwellwert 0.15 . Das bedeutet, dass hier nur die Wahrscheinlichkeitswerte $p(X,1)=0.2$ und $p(X,2)=0.6$ des Standard-Codebuchs 1 sowie $p(X,1)=0.3$, $p(X,2)=0.4$ und $p(X,4)=0.2$ des nach trainierten Codebuchs 2 über dem Schwellwert liegen und für die weitere Betrachtung relevant sind. Als nächster Schritt wird eine Normierung auf "Summe=1" durchgeführt:

$$\frac{1}{\displaystyle\sum_{k=1}^{N} p(x,k)} \cdot p(x,k) \qquad\qquad \text{Gl. 1}$$

N ist die Anzahl der Wahrscheinlichkeiten, die über dem Schwellwert liegen; d.h. in unserem Beispiel ist N=2 für das Standard-Codebuch 1 und N=3 für das nachtrainierte Codebuch 2 und k bezeichnet die Normalverteilung innerhalb der Codebücher denen der entsprechende Wahrscheinlichkeitswert zuzuordnen ist. Der erste Teil der Gleichung ergibt den sogenannten Normierungsfaktor F gemäß

$$F = \frac{1}{\displaystyle\sum_{k=1}^{N} p(x,k)} \qquad\qquad \text{Gl. 2}$$

Für jedes Codebuch ergibt sich somit ein spezieller Normierungsfaktor, in unserem Beispiel ist.

$F_{stndrd}$ = 1.25 für das Codebuch 1
$F_{nachtr}$ = 1.11 für das Codebuch 2

Der Normierungsfaktor F wird nun folgendermaßen interpretiert: je näher ein Merkmalsvektor im Mittel den Normalverteilungen eines Codebuchs ist, das heißt je größer die Wahrscheinlichkeitswerte für diesen Vektor sind, desto eher entspricht dieses Codebuch dem aktuellen Sprecher. Aus Gleichung (2) ist ersichtlich, dass der Normierungsfaktor um so kleiner wird, je größer die Wahrscheinlichkeitswerte sind. In unserem Beispiel würde sich das Verfahren für den nachtrainierten Sprecher entscheiden.

Das Entscheidungskriterium für einen Sprecherwechsel ist also der Normierungsfaktor nach Gleichung (2).

Verschiedene Ausprägungen der Erfindung sind nun möglich:

- Entscheidung für jeden einzelnen Merkmalsvektor während des gesamten Erkennungsbetriebes, wobei in gewinnbringender Weise die Entscheidungen in Folge so schnell als möglich getroffen werden, so dass noch ein Betrieb des Verfahrens in Echtzeit möglich ist, oder

- Entscheidung nur für die erste Äußerung (Wort, Satz) eines Sprechers; danach wird die Entscheidung eingefroren; d.h. für einen gewissen Zeitraum, beispielsweise bis eine signifikante Sprechpause eintritt, wird nur das der ersten Äußerung zugeordnete Codebuch weiterverwendet.

## Patentansprüche

1. Verfahren zur automatischen Detektion von Sprecherwechseln in Spracherkennungssystemen welche auf Basis von Hidden Markov Modellen arbeiten, und über ein sprecher-unabhängiges Codebuch verfügen, welche aus n-dimensionalen Normalverteilungen besteht,
   **dadurch gekennzeichnet, dass** neben dem sprecher-unabhängigen Codebuch, wenigstens ein sprecher-abhängiges Codebuch existiert,
   und dass das Spracherkennungssystem ein Sprachsignal mittels Vektorquantisierung mit dem sprecher-unabhängigen und den sprecher-abhängigen Codebüchern korreliert, und auf Grundlage dieser Korrelation auf die Identität eines Sprechers entscheidet.

2. Verfahren nach Anspruch 1, **dadurch gekennzeichnet, dass** von den aus der Vektorquantisierung resultierenden Wahrscheinlichkeitswerten nur diejenigen zur Korrelation herangezogen werden, welche einen bestimmten, vorgebbaren Schwellwert überschreiten.

3. Verfahren nach einem der Ansprüche 1 oder 2, **dadurch gekennzeichnet, dass** vor der Korrelation aus den aus der Vektorquantisierung resultierenden Wahrscheinlichkeitswerten für jedes der Codebücher ein Normierungsfaktor F berechnet wird, dergestalt dass gilt :

$$F = \frac{1}{\sum\limits_{k=1}^{N} p(x,k)}.$$

4. Verfahren nach Anspruch 3, **dadurch gekennzeichnet, dass** dasjenige Codebuch dem Sprachsignal als zugehörig zugeordnet wird, welches den bezüglich dieses Sprachsignals kleinsten Normierungsfaktor F aufweist.

5. Verfahren nach einem der Ansprüche 1 bis 4, **dadurch gekennzeichnet, dass** das Verfahren kontinuierlich, nach Möglichkeit in Echtzeit, das Sprachsignal auf Sprecherwechsel hin untersucht.

6. Verfahren nach einem der Ansprüche 1 bis 4, **dadurch gekennzeichnet, dass** das Verfahren nur in Bezug auf einen Teil einer Sequenz des Sprachsignals eine Sprecheridentifikation vornimmt, und die daraus resultierende Wahl für die gesamte Sequenz aufrecht erhält.

7. Verfahren nach Anspruch 6, **dadurch gekennzeichnet, dass** sich diese Teilsequenz auf den Anfang eines Wortes oder auf den Anfang eines Satzes bezieht.

Figur